# EUROPÄISCHE PATENTANMELDUNG

(11) **EP 2 301 364 A1**
(43) Veröffentlichungstag der Anmeldung: **30.03.2011**
(21) Anmeldenummer: 09012357.1
(22) Anmeldetag: 29.09.2009
(51) Int. Cl.: A22C 13/00

(54) **Schrumpfhülle für Nahrungsmittel mit Klebesystem und übertragbarer Funktionssubstanz**

(71) Anmelder: CaseTech GmbH, 29699 Bomlitz (DE)
(72) Erfinder: Henze-Wethkamp, Heinrich, 29664 Walsrode (DE); Auf der Heide, Christian, 49080 Osnabrück (DE); Krallmann, Anton, 29862 Bad Fallingbostel (DE)
(74) Vertreter: Polypatent

(57) **Zusammenfassung**

Die Erfindung betrifft eine ein- oder mehrschichtige schlauchförmige Nahrungsmittelhülle, insbesondere für Lebensmittel, die in der Hülle gebrüht, gekocht oder anderweitig erhitzt werden, vorzugsweise für Koch- oder Brühwürste, Schinken, Pökelwaren oder Schmelzkäse, wobei auf die innenseitige Oberfläche der Nahrungsmittelhülle eine Zusammensetzung aufgetragen ist, die mindestens ein nahrungsmittelgeeignetes Bindemittel und mindestens eine auf das Nahrungsmittel übertragbare Funktionssubstanz umfasst.

## Beschreibung

Die Erfindung betrifft eine ein- oder mehrschichtige schlauchförmige Nahrungsmittelhülle, insbesondere für Lebensmittel, die in der Hülle gebrüht, gekocht oder anderweitig erhitzt werden, vorzugsweise für Koch- oder Brühwürste, Schinken, Pökelwaren oder Schmelzkäse, wobei auf die innenseitige Oberfläche der Nahrungsmittelhülle eine Zusammensetzung aufgetragen ist, die mindestens ein nahrungsmittelgeeignetes Bindemittel und mindestens eine auf das Nahrungsmittel übertragbare Funktionssubstanz umfasst.

Bei den genannten Lebensmitteln wird zunehmend ein Farb- und/oder Aromatransfer während des Koch- oder Brühprozesses von der Hülle auf das Lebensmittel gewünscht. Brühwurst und Kochpökelwaren werden noch in großem Umfang im Cellulosefaserdarm hergestellt. Dieser Cellulosefaserdarm hat eine hohe Wasserdampf- und Gasdurchlässigkeit, um die Produkte während des Produktionsprozesses zu räuchern. Es ist ferner bekannt, dass Cellulosefaserdärme mit Flüssigrauch imprägniert werden, um die Räucherzeit zu verkürzen. Die Herstellung von Lebensmitteln im Cellulosefaserdarm ist jedoch aufgrund der Wasserdampf- und Gasdurchlässigkeit der Hülle immer mit Gewichts-, Geschmacks- und Aromaverlust beim Herstellungsprozess, beim Kühlen und bei der Lagerung verbunden. Um den Nachteil der Wasserdampf- und Gasdurchlässigkeit zu vermeiden, wurden speziell für die Großindustrie Kunststoffhüllen aus Materialien entwickelt, welche über eine Wasserdampf- und Gasundurchlässigkeit verfügen. Bei der Verwendung solcher Kunststoffhüllen entsteht weder beim Produktionsprozess noch bei der Lagerung und dem Versand Gewichts-, Aroma- und Geschmacksverlust. Die Imprägnierung von reinen Kunststoffhüllen mit Funktionssubstanzen wie Aromastoffen, Gewürzen und ähnlichen Stoffen führt jedoch zunächst nicht zum Erfolg, da die verwendeten Kunststoffe nicht genügend Funktionssubstanzen aufnehmen können, so dass bei der Konfektionierung und bei der Befüllung der Kunststoffhüllen diese Funktionssubstanzen wieder abgestreift werden.

Die EP 0992194 löst dieses Problem dadurch, dass die Hülle eine mit ihr verbundene saugfähige Innenlage aus Einzelfasern oder einem Gewebe, Gewirk, Gestricke oder Vlies trägt und dass diese Innenlage mit Farb- und/oder Aromastoffen getränkt ist.

In dem Patent US 3330669 wird hingegen die Verwendung von verdickter Räucherflüssigkeit beschrieben. Die Räucherflüssigkeit wird dort allerdings auf die innere Oberfläche einer Cellulosehülle gesprüht, die jedoch die oben beschriebenen Nachteile wie Wasserdampf- und Gasdurchlässigkeit aufweist. Die aufgetragene gleichmäßige Schicht soll an der Oberfläche kleben und daran haften bleiben. Die Erzeugung dieser Schicht ist nur durch das Aufsprühen der dicken Räucherflüssigkeit auf die Wursthülle unmittelbar vor dem Auffüllen mit der Hackfleischemulsion oder vor dem Auffüllen mit dieser Lösung und nachfolgendem Ablass des Überschusses und Trocknen möglich. Die Auftragung der Räucherflüssigkeit auf solche Hüllen führte darüber hinaus oft dazu, dass nur eine ungenügende Menge der Flüssigkeit auf der Oberfläche haften blieb, und dass sie sich äußerst ungleichmäßig auf der Oberfläche verteilte.

Eine technische Lösung beschreibt die US 2004/0197583. Dort wird eine Folie beschrieben bei der auf die Innenoberfläche Räucherflüssigkeit mit einem Viskositätsmodifiziermittel und einem Oberflächenaktivstoff aufgetragen wird. Die Flüssigrauchzusammensetzung wird dort wenigstens teilweise in die Poren auf der Innenoberfläche der Folie aufgenommen. Die Poren entstehen nach einer Korona-, Plasma-, Strahlen- oder chemischen Behandlung.

Die Wursthülle gemäß der DE-A 195 00 470 weist auf der Innenseite eine aus dem flüssigen Zustand erstarrende Haftschicht auf, wobei als Hüllenmaterial Baumwollgewebe mit Leinenbindung offenbart ist. Vor dem Erstarren werden darauf Gewürzpartikel, insbesondere Pfefferkörner oder gemahlener Pfeffer, aufgebracht. Das geschieht bevorzugt durch Aufschleudern mit speziellen Vorrichtungen.

In der EP-B 0 408 164 ist ein Matrixmaterial aus natürlichen oder synthetischen Fasern beschrieben, das gegenüber Wasser und Hitze beständig ist. Auf diesem Matrixmaterial ist eine Schicht aus Kräutern, Gewürzen, Meeresfrüchten oder Milcherzeugnissen in Pulver- oder Chipsform aufgetragen. Die Verbindung zwischen der Schicht aus dem Nahrungsmittel und dem Matrixmaterial erfolgt durch eine Klebeschicht aus einem essbaren, wasserlöslichen, hochmolekularen Material, das als Nahrungsmittelergänzung geeignet ist. Diese Klebeschicht umfasst natürliche Polysaccharide, Carboxymethylcellulose-Natrium, Carboxymethylstärke oder ähnliches.

In der EP 1820404 B1 wird eine Nahrungsmittelhülle mit einem Träger auf Basis mindestens eines nicht wasserlöslichen, thermoplastischen Polymers, eines Polymers tierischen oder pflanzlichen Ursprungs oder regenerierter oder gefällter Cellulose beschrieben, die innenseitig eine Beschichtung aufweist, die ein Bindemittel und mindestens ein Additiv enthält, das auf das Füllgut übertragbar ist, wobei das Additiv aus fein- bis grobkörnigen Nahrungsmitteln oder Mischungen mit einer mittleren Partikelgröße von mindestens 60 µm besteht. In den Beispielen werden jedoch nur Cellulosehüllen oder andere saugfähige bzw. adsorptive Hüllen beschrieben oder Flachfolien, die um ein formstabiles Lebensmittel gewickelt werden. Schlauchförmige Hüllen mit einer innenseitig im Wesentlichen glatten, nicht-saugfähigen, nicht-porösen und nicht-vlies- bzw. gewebeartigen Oberfläche aus einem thermoplastischen Polymer werden nicht beschrieben.

Wie aus obigen Ausführungen ersichtlich, gibt es zahlreiche Versuche und einige brauchbare Möglichkeiten, Funktionssubstanzen auf ein sich in einer Hülle befindliches Nahrungsmittel zu übertragen. Je nach Übertragungsverfahren und je nach Eigenschaften der innenseitigen Oberfläche des Hüllenmaterials gelingt ein Funktionsübertrag mehr oder weniger gut bzw. intensiv. In vielen Fällen wäre es wünschenswert, den Funktionsübertrag nicht nur sicherer und gleichmäßiger über die Fläche verteilt zu gewährleisten, sondern darüber hinaus auch den Funktionsübertrag an sich zu intensivieren.

Aufgabe der vorliegenden Erfindung war es somit, eine Nahrungsmittelhülle, insbesondere für Wurstwaren, zur Verfügung zu stellen, die schlauchförmig ist, vorzugsweise nahtlos, die innenseitig gegebenenfalls eine im Wesentlichen glatte, nicht-saugfähige, nicht-poröse und nicht-vlies- bzw. gewebeartige Oberfläche aufweisen kann, wobei die innenseitige Oberfläche aus einem thermoplastischen Polymer besteht oder ein solches überwiegend umfasst, und mit der eine Funktionssubstanz, wie etwa Aroma, Gewürz und/oder ein Farbstoff, möglichst effizient, gleichmäßig, wohldosierbar und insbesondere intensiv auf ein in die Hülle gefülltes Nahrungsmittel übertragen werden kann. Weiterhin war es Aufgabe, ein entsprechendes Verfahren zur Herstellung einer solchen Nahrungsmittelhülle zur Verfügung zu stellen.

Gelöst wird diese Aufgabe durch eine ein- oder mehrschichtige schlauchförmige Nahrungsmittelhülle, mit einem entsprechenden Nahrungsmittel gefüllt oder ungefüllt, wobei auf die innenseitige Oberfläche der Nahrungsmittelhülle eine Zusammensetzung aufgetragen ist, die mindestens ein nahrungsmittelgeeignetes Bindemittel und mindestens eine auf das Nahrungsmittel übertragbare Funktionssubstanz umfasst, dadurch gekennzeichnet, dass die Nahrungsmittelhülle Schrumpfeigenschaft besitzt.

Die erfindungsgemäße Lösung sieht nun vor, dass neben der Maßnahme, dass auf die innenseitige Oberfläche einer Nahrungsmittelhülle eine Zusammensetzung aufgetragen wird, die neben den auf das Nahrungsmittel zu übertragenden Funktionssubstanz(en) mindestens ein Bindemittel enthält, darüber hinaus die Nahrungsmittelhülle Schrumpfeigenschaft besitzt. Es war überraschend, dass sich mit den erfindungsgemäß ausgestatteten Hüllen auch Hüllen für den Übertrag von Funktionssubstanzen auf Nahrungsmittel eignen, die dafür normalerweise ungeeignet sind. So können auch weitere, einem solchen Funktionsübertrag bisher nicht zugängliche Sektoren im Lebensmittelbereich erschlossen werden. Beim Schrumpfen der Hülle wird ein besonders inniger Kontakt zwischen Funktionssubstanz und Nahrungsmittel hergestellt. Es wird ein Druck aufgebaut, durch den der Funktionsübertrag wesentlich intensiviert wird.

Besonders bevorzugt ist, dass die Schrumpfeigenschaft der Nahrungsmittelhülle derart ist, dass die Hülle unter dem Einfluss von Wärme, vorzugsweise Wärme in Verbindung mit Feuchtigkeit, oder beim Trocknen der feuchten Hülle schrumpft.

Hüllen, die in der Wärme, insbesondere in der Wärme in Verbindung mit Feuchtigkeit schrumpfen sind z.B. verstreckte thermoplastische Polymere wie biaxial verstreckte coextrudierte Kunststoffschlauchhüllen. Vorzugsweise schrumpfen solche Hüllen insbesondere im Bereich von 60 bis 100°C, besonders bevorzugt im Bereich von 70 bis 90°C. Die diesbezüglichen Schrumpfwerte können im Bereich von bis zu 50%, typischerweise bis 20% nach 10 Minuten Kochen der Hüllen in Leitungswasser liegen (Prüfvorschrift siehe Beispiele). Nichtverstreckte Polymerhüllen weisen hierbei typischerweise keinen oder fast keinen Schrumpf auf.

Hüllen, die einen Schrumpf beim Abtrocknen aufweisen sind z.B. Collagenfaser- oder Cellulosefaserhüllen - auch barrierebeschichtet z.B. mit PVDC. Beim außenbeschichteten Cellulosefaserdarm FVP (CaseTech GmbH), beim innenbeschichteten Cellulosefaserdarm F plus (CaseTech GmbH) und beim Cellulosefaserdarm sind das z.B. 5-25%, vorzugsweise10-20% freier Schrumpf, d.h. im ungefüllten Zustand nach Lagerung in Wasser von z.B. 23 °C (Prüfvorschrift siehe Beispiele).

Zu den Bindemitteln ist noch zu sagen, dass diese verzehrbar, also nahrungsmittelgeeignet sein müssen, da das vor dem Verzehr aus der Hülle entfernte Nahrungsmittel zumindest einen Teil des Bindemittels oder alles davon aufgenommen haben kann. Unter "Zusammensetzung" wird hier eine aus mehreren verschiedenen Bestandteilen bestehende bzw. solche Bestandteil enthaltende Mischung verstanden. Diese Mischung kann in aufgetragenem Zustand feucht, trocken bzw. wasserfrei, pastös oder auch viskos sein. Die Zusammensetzung /Mischung kann aber auch getrocknet sein, das heißt, sie kann in feuchtem, pastösem oder niederviskosem Zustand oder in Form einer Aufschlämmung, Emulsion, Lösung oder dergleichen aufgetragen und anschließend getrocknet worden sein. Durchpolymerisierte oder polymerisierende und somit einen Polymerfilm bildende Zusammensetzungen sind hier nicht gemeint.

In einer besonderen Ausführungsform der Erfindung kann die Nahrungsmittelhülle eine innenseitige Schicht, die aus einem thermoplastischen Polymer besteht oder ein solches überwiegend umfasst, umfassen und die innenseitige Oberfläche im Wesentlichen glatt, nicht-saugfähig, nicht-porös und nicht-vlies- bzw. gewebeartig sein. Wie einleitend erläutert, führt im Falle von reinen Kunststoffhüllen, die oft eine glatte und nicht saugfähige Innenoberfläche aufweisen, die Behandlung mit einer oder mehreren Funktionssubstanzen dazu, dass bei der Konfektionierung und bei der Befüllung der Kunststoffhüllen diese Funktionssubstanzen wieder abgestreift werden. Im Falle von Kunststoffhüllen, insbesondere auch im Falle von Kunststoffhüllen aus thermoplastischen Polymeren, die eine raue, reliefartige, poröse, vliesartige und/oder sonst wie saugfähige Innenoberfläche aufweisen, besteht diese Problematik nicht, bzw. nicht in so großem Ausmaß. Die vorliegende Erfindung erlaubt jedoch das angesprochene Problems zu lösen und bezieht sich somit in einer besonderen Ausführungsform explizit auch auf Hüllen mit einer Innenoberfläche, die die beschriebenen rauen, reliefartigen, porösen, vliesartigen und/oder sonst wie saugfähigen Eigenschaften nicht aufweisen, also auf Hüllen mit einer "innenseitig im Wesentlichen glatten, nicht-saugfähigen, nicht-porösen und nicht-vlies- bzw. gewebeartigen Oberfläche".

Bezüglich des Umfangs der Auftragung ist bevorzugt, dass die Zusammensetzung im Wesentlichen vollflächig auf die innenseitige Oberfläche aufgetragen ist. "Im Wesentlichen vollflächig" meint, dass außer gegebenenfalls im Endenbereich der Hülle vorzugsweise 100 %, jedenfalls mindestens 95 %, der Innenoberfläche mit der Zusammensetzung beschichtet sind. Die Auftragung kann jedoch auch nur partiell, also z.B. halbseitig, erfolgen oder bestimmte Bereiche der Fläche können mit einem Muster, z.B. so genannte "Grillmarks", auf diese Weise beschichtet sein.

Geeignete Bindemittel sind insbesondere Polysaccharide wie Cellulosederivate, speziell Ether oder Ester der Cellulose, wie Methylcellulose oder Carboxymethylcellulose-Natrium, daneben auch Alginsäure und/ oder Alginat, Chitosan, Pektin, Carrageenan oder Stärke bzw. Stärkederivate, Proteine, wie Gelatine und Gelatine-Hydrolysate, Kollagen, Albumin, Casein, Zein, Weizenprotein, Sojaprotein oder Erbsenprotein, vorzugsweise Bluthydrolysat, Blutplasma, Myoglobin, Proteinhydrolysate mit Molekulargewichten von 5 000 bis 30 000 Dalton, sauer verkochtes Kollagen mit Molekulargewichten von 20 000 bis 1 000 Dalton oder Desamidokollagen, das durch alkalische Hydrolyse erhältlich ist. Als Bindemittel geeignet sind ferner Fette, Wachse, Öle oder andere hydrophobe, in Wasser nicht lösliche Substanzen, die unter Wärmeeinwirkung erweichen oder flüssig werden, dabei ihre Klebekraft verlieren und so eine Übertragung der Funktionssubstanz bewirken. Das können Talge, trocknende Öle, nichttrocknende Öle, halbtrocknende Öle, Wachse, Fettsäuren, Fettsäureester, Fettalkohole oder Mischungen daraus sein. Diese hydrophoben Substanzen können mit den vorgenannten Proteinen, insbesondere mit hitzekoagulierbaren Proteinen abgemischt werden. Lipide haben den zusätzlichen Vorteil, dass sie - soweit sie mit übertragen werden - als Geschmacksverstärker für Gewürze oder andere Additive dienen.

Bevorzugte Bindemittel sind Polysaccharide, vorzugsweise Ether oder Ester der Cellulose, wie Methylcellulose oder Carboxymethylcellulose-Natrium (CMC); Stärke oder Stärkederivate; Casein; Weizenprotein; Sojaprotein; Albumin; Gelatine; Kollagen; Alginat; Carageenan; Glucomannan; sowie Kombinationen davon. Das Bindemittel bzw. die Zusammensetzung enthaltend das Bindemittel kann als wässrige Lösung oder wässrige Aufschlämmung auf die Innenoberfläche der Hüllen aufgebracht und anschließend getrocknet werden. Das heißt, dass in diesem Fall das innenseitig aufgetragene Bindemittel der erfindungsgemäßen Hülle auf einer wässrigen Lösung oder Aufschlämmung eines solchen Bindemittels basiert.

Carboxymethylcellulose ist als Bindemittel im Rahmen der vorliegenden Erfindung besonders geeignet, weil es gut in Lösung zu bringen ist und zwar sowohl in kaltem als auch in heißem Wasser. Somit lässt sich CMC leicht unter verschiedenen Produktionsbedingungen und für verschiedene Einsatzzwecke verwenden. Nachteilig bei z.B. Methylcellulose (MC) ist, dass diese nicht so gut löslich ist, insbesondere nicht in heißem Wasser >55°C. Für das spätere Auftragen der das Bindemittel enthaltenen Zusammensetzung ist es von Vorteil, wenn das Bindemittel gelöst und nicht nur aufgeschlämmt ist.

Eine weitere Variante ist es, das Bindemittel nicht in Wasser aufzulösen, sondern in einer anderen Substanz, z.B. direkt in der Funktionssubstanz (z.B. Flüssigrauch).

Ein weiterer Vorteil von CMC-basierten Zusammensetzungen ist, dass die (getrocknete) Beschichtung transparenter ist als im Falle von z.B. MC-basierten Beschichtungen, aber auch besser als im Falle vieler anderer Bindemittel.

Die Kalt- und Heiß-Wasserlöslichkeit von CMC hat auch den Vorteil, dass sich vom fertigen umhüllten Nahrungsmittel die Hülle vor dem Verzehr des Nahrungsmittels leichter wieder entfernen lässt, da das in der Regel feuchte Nahrungsmittel die Beschichtungszusammensetzung bereits an- oder aufgelöst hat.

Schließlich ist CMC auch preiswerter als MC und viele der anderen genannten Bindemittel. Umso überraschender, dass sich viele Vorteile gerade aus der Verwendung von CMC als Bindemittel ergeben.

Die Zusammensetzung kann neben dem Hauptbindemittel Carboxymethylcellulose ein oder mehrere weitere Bindemittel enthalten, z.B. ausgewählt aus der Gruppe, die andere Celluloseether, wie Methylcellulose; Stärke oder Stärkederivate; Casein; Weizenprotein; Sojaprotein; Albumin; Gelatine; Kollagen; Alginat; Carageenan; Glucomannan; sowie Kombinationen davon umfasst.

Das thermoplastische Polymer aus dem die innenseitige Schicht ausschließlich oder überwiegend besteht, ist vorzugsweise ausgewählt aus der Gruppe, die Polyamide; Polyvinylidenchloride (PVDC); Polyvinylchloride (PVC); Polystyrole; Polyester; Polyacrylate; Polyolefine, wie Polyethylen; oder Copolymere auf Basis der genannten Polymere umfasst.

Unter "innenseitige Schicht, die aus einem thermoplastischen Polymer besteht oder ein solches überwiegend umfasst" sollen hier ganz allgemein alle innenseitigen Schichten verstanden werden, die mehr als 50 Gew.-% eines thermoplastischen Polymers umfassen. Also z.B. Schichten, die zu 100 % aus einem thermoplastischen Polymer oder aus einem Gemisch (Blend) verschiedener thermoplastischer Polymere bestehen, aber auch Schichten, die bis unter 50 Gew.-% andere Bestandteile wie Füllstoffe oder Additive enthalten. Füllstoff können z.B. Siliciumdioxid, Talk (Mg₂SiO₄), Aluminiumoxid, Aluminiumhydroxid, hydratisierter Tonerde, kalzinierte Tonerde, Titandioxid, Zirkoniumoxid, Natriumsilicat und/oder Silicat sein. Additive können Gleitmittel, Antiblockmittel, Nukleierungsmittel, Füllstoffe, Farbpigmente und/oder andere Additive sein.

Zur weiteren Abgrenzung der erfindungsgemäßen Hüllen vom Stand der Technik und in einer bevorzugten Ausführungsform entspricht das Merkmal einer "innenseitig im Wesentlichen glatten, nicht-saugfähigen, nicht-porösen und nicht-vlies- bzw. gewebeartigen Oberfläche" der Oberfläche einer innenseitigen Schicht, die aus einem Material besteht, welches eine Wasseraufnahmefähigkeit von kleiner gleich 5%, bevorzugt kleiner gleich 2 %, besonders bevorzugt kleiner 1,5% gemessen nach ASTM D 570 (24h) und einen Oberflächenglanz von mehr als 2, bevorzugt mehr als 5, besonders bevorzugt mehr als 10 Glanzeinheiten aufweist, gemessen nach DIN 67539/ISO 2813 bei einem Messwinkel von 85 Grad.

Zur Wasseraufnahmefähigkeit des Materials der innenseitigen Schicht inklusive der innenseitigen Oberfläche ist zu sagen, dass diese ein brauchbares Maß für die Saugfähigkeit und Porosität der innenseitigen Oberfläche der erfindungsgemäßen Hüllen ist und sich gut zur Abgrenzung von Hüllen aus dem Stand der Technik eignet. So beträgt die Wasseraufnahmefähigkeit gemäß ASTM D 570 (24h) von Cellulosefaser 9%, Celluloseacetat 6%, PA6 1,9%, PA66 1,5%, PVC 0,5%, PET 0,3%, PP 0,03% und von PE <0,01 %.

Zum Kriterium Oberflächenglanz ist zu sagen, dass dieser ein brauchbares Maß für die Glätte bzw. Rauhigkeit der innenseitigen Oberfläche der erfindungsgemäßen Hüllen ist und sich gut zur Abgrenzung von Hüllen aus dem Stand der Technik eignet. Je kleiner die Glanzwerte sind, desto matter erscheint die Oberfläche und desto rauher ist die Oberfläche. So wurden mit dem Glanzmessgerät Micro-Tri-Gloss /Fa. BYK Gardner GmbH nach DIN67530 (ISO 2813) der Oberflächenglanz beispielhaft an unbedruckten Hüllen gemessen: Polyamidhülle (K flex/Fa. CaseTech GmbH) 83, mattierte Polyamidhülle (K flex matt/CaseTech) 39, außen PVDC-beschichteter Cellulosefaserdarm (FVP/CaseTech) 25, Cellulosefaserdarm (FR/CaseTech) 10, Cellulosefaserdarm matt (FMT/CaseTech) 5, Textildarm (Betex RS und Betex KD naturell//Fa. Texda) 1, und als Vergleich Cellulosefaservlies (25g/m², Fa. Ahlstrom) 2, Cellulosehandtuch (Handtuch weiß/Fa. Profix) 0,5.

Bei der "Funktionssubstanz" handelt es sich im Rahmen dieser Erfindung um ein Aroma, einen Farbstoff, ein Gewürz oder einen anderen Nahrungsmittelzusatzstoff, sofern die Substanz in der Frischfleisch- und Fischverarbeitung oder der Wurst- und Käseproduktion Verwendung finden kann. Darunter fallen sämtliche Gewürze, Gemüse, Kräuter, Pilze, Getreide und Nüsse sowie Käsesorten in jeder beliebigen Form (z. B. gerieben, flockig, stückig oder geschmolzen etc.). Darunter fallen auch Aroma- und/oder Geschmacksstoffe wie Pfeffer, Koriander, Curry, Chili, Paprika, Zimt, Karamell, Knoblauch, Zwiebeln, Lauch, Karotten, Paprika- und Pfefferschoten, Sellerie, Spargel und sonstiges Gemüse in jeder möglichen Form, Früchte, aber auch frische oder getrocknete, gerebelte Kräuter, z.B. Petersilie oder Dill, insbesondere Dillspitzen, kurz: alles was Fleisch-, Wurst-, Fisch- oder Käseprodukte schmackhafter macht oder veredelt. Neben den vorgenannten Substanzen fallen unter den Begriff "Funktionssubstanz" auch Nahrungsmittelzusatzstoffe, insbesondere farbgebende Mittel und vor allem Flüssigrauch. Bevorzugt sind zu nennen: Zuckercouleur, Lebensmittelfarbstoffe E124 (Cochenillerot A), E155 (Braun HT), E120 (Carmin), Paprika-Oleoresin (E160C), Konzentrate und Extrakte aus Holunder, Pflaume oder Tomate, Getreide (insbesondere Gerste) und Zubereitungen davon (wie Malz oder Malzextrakt), Johannisbrotkernmehl, Guarkernmehl, Kaffee, Zichorie oder Kakao etc.

Zur Klarstellung sei gesagt, dass die hier beschriebenen "Funktionssubstanzen" sich unterscheiden von den hier genannten "Nahrungsmitteln" und "Lebensmitteln", auch wenn die Funktionssubstanzen in herkömmlichem Sinne Nahrungsmittel bzw. Lebensmittel sein können. "Nahrungsmittel" und "Lebensmittel" im Sinne der vorliegenden Erfindung sind solche Füllgüter, die von der erfindungsgemäßen Hülle umschlossen werden sollen.

Die erfindungsgemäße Nahrungsmittelhülle kann mit Naht oder nahtlos sein. Bei nahtlosen Hüllen kann eine Schwierigkeit darin bestehen, eine Zusammensetzung, eine Lösung, eine Paste oder eine viskose Masse so auf die Innenseite der Hülle aufzutragen, dass eine vollflächiger Beschichtung erzielt wird. Bei schlauchförmigen Hüllen mit Naht kann dieses Problem umgangen werden, indem eine Flachfolie liegend beschichtet und erst dann zu einer Schlauchfolie geformt und mit einer Naht versehen wird. Ein Vorteil der erfindungsgemäßen Hüllen besteht nun darin, dass mit dem unten beschriebenen Verfahren und unter Verwendung der hier beschriebenen Zusammensetzung, diese Hüllen nahtlos zur Verfügung gestellt werden können, da die Zusammensetzung durch das Bindemittel so gut auf der Hüllenoberfläche haftet, dass die Hülle auf "links gezogen" beschichtet und erst anschließend gewendet werden kann. Im Falle einer nahtlosen erfindungsgemäßen Nahrungsmittelhülle kann diese optional uni- oder biaxial verstreckt sein.

Eine typische und bevorzugte erfindungsgemäße Nahrungsmittelhülle sieht so aus, dass die Zusammensetzung aus 3 bis 99 Gew.-% Bindemittel(n), 97 bis 1 Gew.-% Funktionssubstanz(en) und 0 bis 30 Gew.-% anderen Bestandteilen (inklusive Wasser bzw. Restwasser nach einem optionalen Trocknungsschritt) besteht. Weiter bevorzugt besteht die Zusammensetzung aus 15 bis 80 Gew.-% Bindemittel(n), 85 bis 20 Gew.-% Funktionssubstanz(en) und 0 bis 25 Gew.-% anderen Bestandteilen. Noch weiter bevorzugt besteht die Zusammensetzung aus 40 bis 70 Gew.-% Bindemittel(n), 60 bis 30 Gew.-% Funktionssubstanz(en) und 0 bis 25 Gew.-% anderen Bestandteilen.

Die aufgetragene Zusammensetzung kann neben den genannten Bindemitteln und Funktionssubstanzen noch "andere Bestandteile" umfassen. So kann es zur Erhöhung der Elastizität, der Benetzbarkeit und der mikrobiologischen Stabilität zweckmäßig sein, das Bindemittel mit mindestens einer entsprechenden Komponente zu kombinieren. Hierzu eignen sich z.B. Milchsäure und deren Salze, beispielsweise Natriumlactat, Glycerin, Emulgatoren wie Lecithin und/oder Fette und Öle. Sie gewährleisten einen besonders gleichmäßigen und kontinuierlichen Auftrag des Bindemittels. Der Anteil der Komponente an der Beschichtungs- bzw. Imprägnierungsflüssigkeit liegt zweckmäßig bei 0,5 bis 15,0 Gew.-%, bevorzugt bei 2,0 bis 8,0 Gew.-%. Unter "andere Bestandteile" fällt auch Wasser bzw. Restwasser nach einem optionalen Trocknungsschritt.

Typischerweise ist/sind die Funktionssubstanz(en) in die Zusammensetzung eingemischt, d.h. vor dem Auftragen der Zusammensetzung auf die innenseitige Oberfläche ist die Zusammensetzung mit allen Bestandteilen inklusive der Funktionssubstanz(en) durchmischt hergestellt worden. In einer Variante der erfindungsgemäßen Nahrungsmittelhülle kann/können die Funktionssubstanz(en) auch zumindest teilweise nachträglich auf die zuvor aufgetragene Zusammensetzung aufgetragen sein, wobei gegebenenfalls der restliche Anteil der Funktionssubstanz(en) in die Zusammensetzung eingemischt ist. Dabei kann der nachträgliche Auftrag der Funktionssubstanz(en) nach oder vor dem Trocknen oder Trocknenlassen der bereits aufgetragenen Zusammensetzung erfolgen. Beim nachträglichen Auftragen der Funktionssubstanz(en) können diese je nach deren Art und den Umständen in Reinform oder als Formulierung mit anderen Bestandteilen oder als verdünnte Lösung, aufgetragen werden.

Gegenstand der vorliegenden Erfindung ist auch eine mit einem entsprechenden Nahrungsmittel gefüllte erfindungsgemäße Hülle.

Die oben beschriebenen innenseitig beschichteten Nahrungsmittelhüllen mit denen mindestens eine Funktionssubstanz auf die nachträglich in die Hüllen eingefüllte Nahrungsmittel übertragen werden können, können erfindungsgemäß nach einem Verfahren hergestellt werden, welches folgende Schritte umfasst:
a) Bereitstellen einer ein- oder mehrschichtigen schlauchförmigen Nahrungsmittelhülle umfassend eine innenseitige Oberfläche, wobei zumindest eine Schicht der Hülle Schrumpfeigenschaft besitzt, und wobei die innenseitige Oberfläche bei der Bereitstellung zunächst außen liegt,
b) Auftragen einer Zusammensetzung auf die außen liegende Oberfläche der innenseitigen Schicht der Nahrungsmittelhülle, wobei die Zusammensetzung mindestens ein nahrungsmittelgeeignetes Bindemittel und mindestens eine auf das Nahrungsmittel übertragbare Funktionssubstanz umfasst, wobei
   i) die Funktionssubstanz(en) vor dem Auftragen in die Zusammensetzung eingemischt werden, oder wobei
   ii) die Funktionssubstanz(en) zumindest teilweise nachträglich auf die zuvor aufgetragene Zusammensetzung aufgetragen werden,
c) optional Trocknen oder Trocknenlassen der aufgetragenen Beschichtung(en), und jedenfalls
d) Wenden der beschichteten Hülle, so dass die Beschichtung(en) innenseitig zu liegen kommen.

Wie oben bereits ausgeführt, kann die bereitgestellte Nahrungsmittelhülle eine innenseitige Schicht aus einem thermoplastischen Polymer umfassen und die innenseitige Oberfläche im Wesentlichen glatt, nicht-saugfähig, nicht-porös und nicht-vlies- bzw. gewebeartig sein.

Wie oben bereits beschrieben kann die Zusammensetzung im Wesentlichen vollflächig oder auch nur partiell auf die innenseitige Oberfläche aufgetragen werden. "Im Wesentlichen vollflächig" meint, dass außer gegebenenfalls im Endenbereich der Hülle vorzugsweise 100 %, jedenfalls mindestens 95 %, der Innenoberfläche mit der Zusammensetzung beschichtet werden.

In den oben beschriebenen Schritten b) i) und/oder b) ii) kann die Zusammensetzung bzw. die Funktionssubstanz(en) durch Sprühen, Drucken, Rakeln, Lackieren, Beflocken oder Kalandrieren aufgebracht werden. Verfahren sind in der Literatur beschrieben (z.B. A. Giessmann/2003 "Substrat- und Textilbeschichtung"). Dabei kann gegebenenfalls für die Funktionssubstanz ein anderes Aufbringungsverfahren verwendet werden als für die Zusammensetzung. Im Falle mehrerer Funktionssubstanzen können auch für diese in Abhängigkeit von der Art der Funktionssubstanzen verschiedene Aufbringungsverfahren verwendet werden.

Das Auftragen der Zusammensetzung kann einstufig oder mehrstufig erfolgen. Beim mehrstufigen Verfahren wird zunächst ein erster Teil der Zusammensetzung aufgetragen. Vor dem gegebenenfalls endgültigen Trocknen wird ein zweiter und dann ggf. weiterer Teil der Zusammensetzung aufgebracht.

Wie erwähnt, ist Gegenstand der vorliegenden Erfindung auch eine mit einem entsprechenden Nahrungsmittel gefüllte erfindungsgemäße Hülle, insbesondere bei der ein entsprechender Funktionsübertrag auf das eingefüllte Nahrungsmittel stattfindet bzw. stattgefunden hat. Somit ist ein weiterer Gegenstand der vorliegenden Erfindung ein Verfahren zum Übertragen mindestens einer Funktionssubstanz auf ein Nahrungsmittel, insbesondere auf Wurstbrät, umfassend der Schritt:
a) Herstellen einer innenseitig beschichteten Nahrungsmittelhülle nach dem oben beschriebenen Verfahren,
b) Einfüllen des Nahrungsmittels, insbesondere Wurstbrät, in die so hergestellte Hülle,
c) Schrumpfenlassen der Hülle, und
d) Übertragenlassen der Funktionssubstanz(en) auf das Nahrungsmittel, insbesondere auf das Wurstbrät.

Die Übertragung der Funktionssubstanz(en) kann bereits in Schritt c) beginnen. Der Übertrag in Schritt c) und jedenfalls in Schritt d) kann bei Raumtemperatur, darunter oder darüber erfolgen. Unterhalb der Raumtemperatur erfolgt die Übertragung vorzugsweise durch innigen Kontakt des Füllguts mit der Nahrungsmittelhülle. Diese Übertragung kann schon bei Temperaturen unter 15 °C, vorzugsweise unter 10 °C und insbesondere unter 7 °C stattfinden. Im Allgemeinen beträgt die Übertragungsdauer weniger als 50 Stunden, vorzugsweise weniger als 20-Stunden, insbesondere weniger als 10 Stunden. Die Übertragungsdauer hängt vom Einzelfall ab und kann durch einfache Vorversuche ermittelt werden. Geeignete Bindemittel, die sich (auch) für die Übertragung bei Raumtemperatur oder darunter eignen, sind beispielsweise alkalisches Milcheiweiß, Eiweißhydrolysat, Methylcellulose und Carboxymethylcellulose, da diese sich ohne Wärmeeinwirkung von der Umhüllung lösen und mit dem Füllgut verbinden. Für die Übertragung der Funktionssubstanz(en) bei Temperaturen zumindest über 55°C eignet sich von den Cellulosen aufgrund seiner Löslichkeitseigenschaften insbesondere Carboxymethylcellulose besser als z.B. Methylcellulose, welche bei diesen hohen Temperaturen unlöslich wird.

Die Übertragung der Funktionssubstanz(en) während des Brüh-, Koch- oder sonstigen Erhitzungsvorgangs erfolgt naturgemäß bei Temperaturen oberhalb der Raumtemperatur. Dabei wird aufgrund der Wärmeeinwirkung die Haftung bzw. Bindung der Funktionssubstanz(en) an dem Bindemittel vermindert und die Funktionssubstanz(en) können freigesetzt werden. Zur Aktivierung des Bindemittels sind Temperaturen von 30 bis etwa 90 °C ausreichend.

Alle oben beschriebenen Übertragungsvorgänge können in dem erfindungsgemäßen Verfahren durch die Schrumpfeigenschaft der Hülle beschleunigt oder intensiviert werden. Dabei wird das Schrumpfenlassen wie oben beschrieben entweder unter dem Einfluss von Wärme, und gegebenenfalls Feuchtigkeit oder beim Trocknen der feuchten Hülle ausgelöst oder bewirkt.

Weiterhin ist Gegenstand der vorliegenden Erfindung die Verwendung einer Nahrungsmittelhülle wie oben beschrieben zum Übertragen mindestens einer Funktionssubstanz auf ein Nahrungsmittel, insbesondere auf Wurstbrät.

Das Übertragen kann dabei unter Wärmeeinwirkung, bei Raumtemperatur oder auch darunter erfolgen. So kann die erfindungsgemäße Hülle beispielsweise bei der Herstellung von Koch- und Brühwurst, aber auch zur Veredelung von Schinken, Pökelware und sogar Käse, z.B. Schmelzkäse, verwendet werden. Zum anderen eignet sie sich auch für den Transfer von übertragbaren Funktionssubstanz(en) auf besonders schonend zu behandelndes Füllgut und auf empfindliches Füllgut, das gekühlt verarbeitet oder aufbewahrt werden muss. Beispiele dafür sind Fisch, Frischfleisch aber auch gekochter Schinken, Brüh- und Kochwurst sowie Rohwurst.

Die Verwendung einer ein- oder mehrschichtigen schlauchförmigen Nahrungsmittelhülle bei der die Nahrungsmittelhülle Schrumpfeigenschaft besitzt, und die eine auf die Innenseite der Hülle aufgetragene Zusammensetzung umfasst, wobei die Zusammensetzung mindestens ein nahrungsmittelgeeignetes Bindemittel und mindestens eine Funktionssubstanz umfasst, zur Verbesserung der Übertragung einer oder mehrerer Funktionssubstanzen auf ein Nahrungsmittel, insbesondere auf Wurstbrät ist ebenfalls Gegenstand der vorliegenden Erfindung.

### Beispiele:

Die Hüllen werden wie in der Tabelle 1 angegeben auf der Außenseite mit der jeweils genannten Zusammensetzung vollflächig bzw. teilflächig beschichtet. Die Hüllen werden per Umlufttrocknung (bei 90°C) getrocknet. Die beschichteten Hüllen werden gewendet und später mit Wurstbrät gefüllt und bei 76 °C ca. 1 Stunde gebrüht und ca. zwei Stunden gekühlt. Anschließend werden die Hüllen von den Würsten entfernt. Das Übertragen der Funktionssubstanz(en) auf das Wurstbrät wird bewertet.

Das Auftragen erfolgt mit bekannten Verfahren. Dabei wird die Zusammensetzung einstufig oder mehrstufig aufgetragen. Beim zweistufigen Verfahren wird zunächst wie angegeben ein erster Teil der Zusammensetzung aufgetragen. Vor dem endgültigen Trocknen wird der 2. Teil der Zusammensetzung aufgebracht. Das Auftragen erfolgt wie angegeben auf der gesamten Außenfläche, teilflächig bzw. als Muster.

Schrumpffähigkeit in der Wärme/Feuchte: Die Messwerte werden in Prozent als Längenverlust von der ursprünglichen Messlänge angegeben. Bestimmt werden Längs- und Querschrumpf. Die Schablone wird mit der 100 mm langen Seite an die Liegekante der doppellagigen Darmprobe angelegt. Von dieser Position ausgehend werden zwei Probestücken von 50 x 100 mm zugeschnitten. Für die Längsschrumpfmessung werden mit dem Streifenschneider Darmstreifen (15 x 100 mm) zugeschnitten. Für die Querschrumpfmessung werden aus der zweiten Fläche doppellagige Streifen (15 x 50 mm) geschnitten, die man anschließend an der Liegekante aufklappt, so dass man ebenfalls Proben von 15 x 100 mm messen kann. Die Proben werden nun 15 min in Leitungswasser gekocht. Nachdem man die Proben mit der Pinzette aus dem Becherglas entnommen hat, werden die geschrumpften Streifen mit dem Lineal gemessen. Die Differenz der gemessenen Probenlänge zu 100 mm wird als Schrumpfwert in Prozent angegeben. Messgeräte: Schablone (50 mm breit, 100 mm lang), Streifenschneider (15 mm breit), Lineal. Die Genauigkeit der Messung beträgt ± 1 %. Gemessen bei 23 °C/65% r.F.

Schrumpffähigkeit beim Trocknen: Wie oben, nur dass die Proben nach dem Schneiden 30 min in 20°C warmen Leitungswasser gelagert werden. Nachdem man die Proben mit der Pinzette aus dem Becherglas entnommen hat, werden die Streifen mit dem Lineal gemessen. Nach dem Abtrocknen wird erneut gemessen. Das Trocknen erfolgt bei 23°C/65% r.F. bis zur Gleichgewichtsfeuchte Darm/Umgebung. Die Differenz der gemessenen Probenlänge zu 100 mm wird als Schrumpfwert in Prozent angegeben. Messgeräte: Schablone (50 mm breit, 100 mm lang), Streifenschneider (15 mm breit), Lineal. Die Genauigkeit der Messung beträgt ± 1 %. Gemessen bei 23 °C/65% r.F.

Oberflächenglanz: in Glanzeinheiten, gemessen nach DIN 67539/ISO 2813 bei einem Messwinkel von 85 Grad an der Außenseite der Schlauchhülle, die auch zu beschichten ist.

### Hülle:

H1: Coextrudierter, biaxial gereckter Kunststoffschlauch (Typ Walsroder K flex Kal. 105/CaseTech GmbH, ca. 40µm dick) mit einer Polyamidschicht PA 6 auf der Innen- und auf der Außenseite
   Schrumpffähigkeit in Feuchte: 10% (quer), 10% (längs)
   Schrumpffähigkeit beim Trocknen: 2% (quer), 2% (längs)
   Glanz: 83 GE
H2: außen PVDC-beschichteter Cellulosefaserdarm (Typ Walsroder FVP 105/CaseTech GmbH, ca. 100µm dick)
   Schrumpffähigkeit in Feuchte: 0% (quer), 0% (längs)
   Schrumpffähigkeit beim Trocknen: 14% (quer), 9% (längs),
   Glanz: 25 GE
H3: nicht verstreckter Kunststoffschlauch aus Polyamid 6 (Typ Tripan Kaliber 105/Fa. Naturin , ca. 60µm dick)
   Schrumpffähigkeit in Feuchte: 0% (quer), 0% (längs)
   Schrumpffähigkeit beim Trocknen: 0% (quer), 0% (längs)
   Glanz: 75 GE

### Beispiel 1:

Eine Hülle H1 wurde mit einem Gemisch aus 50 Gew.-% 10 %-iger wässriger CMC-Lösung und 50 Gew.-% Flüssigrauch per Rollenrakelauftrag außen vollflächig, also im flachen Zustand beidseitig, beschichtet. Der so entstandene ca. 40µm dicke Film (Feuchtegewicht 40 g/m²) auf der Polyamidhülle wurde dann per Umlufttrocknung bei 90°C getrocknet (20g/m²). Die beschichtete Polyamidhülle wurde gewendet und mit Wurstbrät gefüllt und bei 76 °C ca. 1 Stunde gebrüht. Nach einer Auskühlzeit von ca. zwei Stunden wurde die Polyamidhülle von der so entstandenen Wurst entfernt. Es zeigte sich ein sehr gleichmäßig übertragener Rauchrand an der Wurst.

### Beispiel 2:

Eine Hülle H2 wurde mit einem Gemisch aus 50 Gew.-% 10 %-iger wässriger CMC-Lösung, 48 Gew.-% Flüssigrauch und 2 Gew.-% Glyzerin per Luftrakelverfahren vollflächig beschichtet. Dabei wird die Hülle in das Gemisch getaucht und dann ein Teil des Gemisches mit Druckluft von der Oberfläche abgestreift. Der so entstandene ca. 40µm dicke Film (Feuchtegewicht 40 g/m²) auf der Hülle wurde dann per Umlufttrocknung bei 90°C getrocknet (20g/m²). Die beschichtete Hülle wurde gewendet und mit Wurstbrät gefüllt und bei 76°C ca. 1 Stunde gebrüht. Nach einer Auskühlzeit von ca. zwei Stunden wurde die Polyamidhülle von der so entstandenen Wurst entfernt. Es zeigte sich ein sehr gleichmäßig übertragener Rauchrand an der Wurst.

### Beispiel 3:

Eine Hülle H1wurde mit einem Gemisch aus 50 Gew.-% 10 %-iger wässriger CMC-Lösung, 48 Gew.-% Flüssigrauch und 1 Gew.-% Tween 80 per Rollenrakelauftrag im flachen Zustand einseitig beschichtet. Der so entstandene ca. 40µm dicke Film (Feuchtegewicht 40 g/m²) auf der Hülle wurde dann per Umlufttrocknung bei 90°C getrocknet (20g/m²). Die beschichtete Hülle wurde gewendet und mit Wurstbrät gefüllt und bei 76°C ca. 1 Stunde gebrüht. Nach einer Auskühlzeit von ca. zwei Stunden wurde die Polyamidhülle von der so entstandenen Wurst entfernt. Es zeigte sich ein sehr gleichmäßig übertragener Rauchrand auf dem halben Umfang der Wurst.

### Beispiel 4:

Eine Hülle H1 wurde mit einem Gemisch aus 50 Gew.-% 10 %-iger wässriger CMC-Lösung, 30 Gew.-% Flüssigrauch und 20 Gew.-% Carnaubawachs per Düsenauftrag vollflächig besprüht. Der so entstandene ca. 60µm dicke Film (Feuchtegewicht 60 g/m²) auf der Polyamidhülle wurde dann per Umlufttrocknung bei 90°C) getrocknet (30g/m²). Die beschichtete Polyamidhülle wurde gewendet und mit Wurstbrät gefüllt und bei 76°C ca. 1 Stunde gebrüht. Nach einer Auskühlzeit von ca. zwei Stunden wurde die Polyamidhülle von der so entstandenen Wurst entfernt. Es zeigte sich ein sehr gleichmäßig übertragener Rauchrand an der Wurst

### Beispiel 5:

Eine Hülle H1 wurde mit einem Gemisch aus 50 Gew.-% 10 %-iger wässriger CMC-Lösung, 40 Gew.-% Flüssigrauch und 10 Gew.-% Grillaroma per beidseitigen Walzenauftrag vollflächig beschichtet. Der so entstandene ca. 60µm dicke Film (Feuchtegewicht 60 g/m²) auf der Polyamidhülle wurde dann per Umlufttrocknung bei 90°C getrocknet (30g/m²). Die beschichtete Polyamidhülle wurde gewendet und mit Wurstbrät gefüllt und bei 76°C ca. 1 Stunde gebrüht. Nach einer Auskühlzeit von ca. zwei Stunden wurde die Polyamidhülle von der so entstandenen Wurst entfernt. Es zeigte sich ein sehr gleichmäßig übertragener Rauchrand an der Wurst

### Beispiel 6 - 10:

Wie in der Tabelle beschrieben wurden die genannten Hüllen mit den benannten Auftragsverfahren mit ca. 40µm einer 10 %-igen wässriger CMC-Lösung beschichtet. Nach dem Beschichten wurden jeweils feinkörnige Gewürze (Curry und Paprika) aufgetragen (durch Schleudern oder Rütteln) und dann wie oben beschrieben weiter verarbeitet. Die entsprechenden Würste wiesen vollflächige oder segmentielle Oberflächen mit Gewürz auf. Die Hüllen ließen sich vollständig und rückstandslos vom Wurstbrät und dem Gewürz lösen.

### Beispiel 11:

Eine Hülle H1 wurde mit einem Gemisch aus 50 Gew.-% 10 %-iger wässriger CMC-Lösung, 40 Gew.-% Flüssigrauch und 10 Gew.-% Grillaroma per beidseitigen Walzenauftrag nicht vollflächig beschichtet. Ähnlich wie beim Druckverfahren wurden ca. 5 mm breite, im Winkel von 45° zur Längslinie geneigte Linien im Abstand von 4 cm aufgebracht. Die so entstandenen ca. 60µm dicken Linien (Feuchtegewicht 4 g/m²) auf der Polyamidhülle wurden dann per Umlufttrocknung bei 90°C getrocknet (0,8 g/m²). Die mit Flüssigrauch und Grillaroma beschichtete Polyamidhülle wurde gewendet und mit Wurstbrät gefüllt und bei 76°C ca. 1 Stunde gebrüht. Nach einer Auskühlzeit con ca. zwei Stunden wurde die Polyamidhülle von der so entstandenen Wurst entfernt. Es zeigten sich vollständig übertragene dunkele Rauchlinien (Grillmarks) an der Wurst, die üblicherweise sonst nur durch Grillen von Wurst-, Fleisch- und Fischwaren erzeugt werden können.

### Beispiel 12: (Vergleichsbeispiel)

Eine Hülle H1 wurde mit einem Flüssigrauch per Rollenrakelauftrag vollflächig beschichtet. Der Flüssigrauchfilm auf der Polyamidhülle wurde dann per Umlufttrocknung bei 90°C für ca. 1 Minute getrocknet. Die mit Flüssigrauch beschichtete Polyamidhülle wurde gewendet und mit Wurstbrät gefüllt und bei 76°C ca. 1 Stunde gebrüht. Nach einer Auskühlzeit von ca. zwei Stunden wurde die Polyamidhülle von der so entstandenen Wurst entfernt. Es zeigte sich ein ungleichmäßiger und streifiger, aber ausreichender Übertrag an Rauchfarbe an der Wurst. Auch der Übertrag an Rauchgeschmack war nur ausreichend. Das Eindringen des Flüssigrauch war gut bis befriedigend. Beim Wenden traten Probleme auf, vor allem ein starker Abrieb des Flüssigrauchs.

### Beispiel 13: (Veraleichsbeispiel)

Eine Hülle H3 wurde mit einem Flüssigrauch per Rollenrakelauftrag vollflächig beschichtet. Der Flüssigrauchfilm auf der Polyamidhülle wurde dann per Umlufttrocknung bei 90°C für ca. 1 Minute getrocknet. Die mit Flüssigrauch beschichtete Polyamidhülle wurde gewendet und mit Wurstbrät gefüllt und bei 76°C ca. 1 Stunde gebrüht. Nach einer Auskühlzeit von ca. zwei Stunden wurde die Polyamidhülle von der so entstandenen Wurst entfernt. Es zeigte sich ein sehr ungleichmäßiger und streifiger, also mangelhafter Übertrag an Rauchfarbe an der Wurst. Auch der Übertrag an Rauchgeschmack war mangelhaft. Das Eindringen des Flüssigrauch war ebenfalls nur ausreichend. Beim Wenden traten Probleme auf, vor allem ein starker Abrieb des Flüssigrauchs.

### Beispiel 14: (Veraleichsbeispiel)

Eine Hülle H3 wird mit dem Auftragsverfahren aus Bsp. 1 mit ca. 40µm einer 10 %-igen wässriger CMC-Lösung beschichtet. Nach dem Beschichten wurden feinkörnige Gewürze (Curry und Paprika) aufgetragen (durch Schleudern oder Rütteln) und dann wie oben beschrieben weiter verarbeitet. Das Übertragen der Gewürze war nur befriedigend, da beim Ablösen der Hülle vom Wurstbrät Anteile von dem Gewürz an der Hülle haften blieben und die Gewürzpartikel nicht gut, d.h. zu leicht in die Wurstoberfläche eingedrückt und mit ihr verbunden waren. Die Übertragung des Gewürzgeschmacks war ebenfalls nur befriedigend.

### Übersicht Beispiel 1 - 14:

**Tabelle 1**

| Bsp. Nr. | Hülle | Beschichtungsauftrag gemäß | Rezeptur der Beschichtung (beim Auftragen) | Ergebnis Übertrag Geschmack bzw. Geruch von Rauch- bzw. Gewürz | Ergebnis Übertrag, Rauchfarbe bzw. Gewürz | Eindringen in Wurstoberfläche |
|---|---|---|---|---|---|---|
| 1 | H1 | Bsp.1 | 50 Gew.- % CMC 1 50 Gew.- % Flüssigrauch 1 | gut | sehr gut | sehr gut |
| 2 | H 2 | Bsp. 2 | 50 Gew.- % CMC 48 Gew.- % Flüssigrauch 1 2 Gew.- % Glyzerin | gut | sehr gut | Sehr gut |
| 3 | H 1 | Bsp. 3 | 50 Gew.- % CMC 49 Gew.- % Flüssigrauch 2 1 Gew.- % Tween 80 | gut | sehr gut | sehr gut |
| 4 | H 1 | Bsp. 4 | 50 Gew.- % CMC 30 Gew.- % Flüssigrauch 1 20 Gew.- % Carnaubawachs | gut | sehr gut | sehr gut |
| 5 | H 1 | Bsp. 5 | 50 Gew.- % CMC 40 Gew.- % Flüssigrauch 3 10 Gew.- % Grillaroma 1 | gut | sehr gut | sehr gut |
| 6 | H1 | Bsp.1 | 1_{.} 100 Gew.-% CMC 2. dann Curry Pulver | gut | sehr gut | sehr gut |
| 7 | H2 | Bsp. 2 | 1.100 Gew.-% CMC 2. dann Curry Pulver | gut | sehr gut | sehr gut |
| 8 | H1 | Bsp. 3 | 1. 100 Gew.-% CMC 2. dann Curry Pulver | gut | sehr gut | sehr gut |
| 9 | H1 | Bsp. 4 | 1. 100 Gew.-% CMC 2. dann Curry Pulver | gut | sehr gut | sehr gut |
| 10 | H1 | Bsp. 5 | 1. 100 Gew.-% CMC 2. dann Curry Pulver | gut | sehr gut | sehr gut |

| Bsp. Nr. | Hülle | Beschichtungsauftrag gemäß | Rezeptur der Beschichtung (beim Auftragen) | Ergebnis Übertrag Geschmack bzw. Geruch von Rauch bzw. Gewürz | Ergebnis Übertrag, Rauchfarbe bzw. Gewürz | Eindringen in Wurstoberfläche |
|---|---|---|---|---|---|---|
| 11 | H1 | Bsp. 11 | 50 Gew.-%CMC 3 40 Gew.-% Flüssigrauch 3 10 Gew.- % Grillaroma 1 | Grillmark gut leichtes Grillaroma | Grillmarks gut sichtbar | Sehr gut Sehr gut |
| 12 (Vergleich) | H1 | Bsp. 1 | Flüssigrauch 1 | ausreichend | ausreichend, sehr streifig | gut bis befriedigend |
| 13 (Vergleich) | H 3 | Bsp. 13 | Flüssigrauch 1 | mangelhaft | mangelhaft, sehr streifig | Ausreichend |
| 14 (Vergleich) | H 3 | Bsp. 1 | 1. 100 Gew.-% CMC 2. dann Curry Pulver | befriedigend | befriedigend, es verbleiben Anteile Gewürz an der Hülle | befriedigend |

| | | |
|---|---|---|
| CMC (10%ige wässrige Lösung) | Dow Wolff Cellulosics | Walocel CRT 30 GA |
| Flüssigrauch 1: | Red Arrow | SmokeEz MB 45 GF |
| Flüssigrauch 2: | Red Arrow | SmokeEz Supreme C |
| Flüssigrauch 3: | Red Arrow | RA 04006 |
| Grillaroma 1: | Red Arrow | Roastin 3123 |
| Tween 80: | ICI Surfactants | Tween 80 |
| Carnaubawachs: | Michelman | ML 160 PF/E |
| Curry Pulver: | Alba | Indian Style |

## Patentansprüche

1. Ein- oder mehrschichtige schlauchförmige Nahrungsmittelhülle, mit einem entsprechenden Nahrungsmittel gefüllt oder ungefüllt, wobei auf die innenseitige Oberfläche der Nahrungsmittelhülle eine Zusammensetzung aufgetragen ist, die mindestens ein nahrungsmittelgeeignetes Bindemittel und mindestens eine auf das Nahrungsmittel übertragbare Funktionssubstanz umfasst, **dadurch gekennzeichnet, dass** die Nahrungsmittelhülle Schrumpfeigenschaft besitzt.

2. Nahrungsmittelhülle nach Anspruch 1, wobei die Schrumpfeigenschaft derart ist, dass die Hülle unter dem Einfluss von Wärme, und gegebenenfalls Feuchtigkeit, schrumpft.

3. Nahrungsmittelhülle nach Anspruch 1 oder 2, wobei die Schrumpfeigenschaft derart ist, dass die Hülle beim Trocknen der feuchten Hülle schrumpft.

4. Nahrungsmittelhülle nach einem der Ansprüche 1 bis 3, wobei das Bindemittel ausgewählt ist aus der Gruppe, die Polysaccharide, vorzugsweise Ether oder Ester der Cellulose, wie Methylcellulose oder Carboxymethylcellulose; Stärke oder Stärkederivate; Casein; Weizenprotein; Sojaprotein; Albumin; Gelatine; Kollagen; Alginat; Carageenan; Glucomannan; sowie Kombinationen davon umfasst.

5. Nahrungsmittelhülle nach einem der Ansprüche 1 bis 4, wobei das thermoplastische Polymer der innenseitigen Schicht ausgewählt ist aus der Gruppe, die Polyamide; Polyvinylidenchloride (PVDC); Polyvinylchloride (PVC); Polystyrole; Polyester; Polyacrylate; Polyolefine, wie Polyethylen; oder Copolymere auf Basis der genannten Polymere umfasst.

6. Nahrungsmittelhülle nach einem der Ansprüche 1 bis 5, wobei das Material der innenseitigen Oberfläche eine Wasseraufnahmefähigkeit von kleiner gleich 5% gemessen nach ASTM D 570 (24h) und einen Oberflächenglanz von mehr als 2 Glanzeinheiten aufweist gemessen nach DIN 67539/ISO 2813 bei einem Messwinkel von 85 Grad aufweist.

7. Nahrungsmittelhülle nach einem der Ansprüche 1 bis 6, wobei es sich bei der Funktionssubstanz um ein Aroma, einen Farbstoff, ein Gewürz oder einen anderen Nahrungsmittelzusatzstoff handelt.

8. Nahrungsmittelhülle nach einem der Ansprüche 1 bis 7, wobei die Hülle nahtlos und optional uni- oder biaxial verstreckt ist.

9. Nahrungsmittelhülle nach einem der Ansprüche 1 bis 8, wobei die Zusammensetzung aus 3 bis 99 Gew.-% Bindemittel(n), 97 bis 1 Gew.-% Funktionssubstanz(en) und 0 bis 30 Gew.-% anderen Bestandteilen besteht.

10. Nahrungsmittelhülle nach einem der Ansprüche 1 bis 9, wobei die Funktionssubstanz(en) in die Zusammensetzung eingemischt oder zumindest teilweise nachträglich auf die zuvor aufgetragene Zusammensetzung aufgetragen sein können.

11. Verfahren zum Herstellen einer innenseitig beschichteten Nahrungsmittelhülle mit der mindestens eine Funktionssubstanz auf das nachträglich in die Hülle eingefüllte Nahrungsmittel übertragen werden kann, umfassend die Schritte:
a) Bereitstellen einer ein- oder mehrschichtigen schlauchförmigen Nahrungsmittelhülle umfassend eine innenseitige Oberfläche, wobei zumindest eine Schicht der Hülle Schrumpfeigenschaft besitzt, und wobei die innenseitige Oberfläche bei der Bereitstellung zunächst außen liegt,
b) Auftragen einer Zusammensetzung auf die außen liegende Oberfläche der innenseitigen Schicht der Nahrungsmittelhülle, wobei die Zusammensetzung mindestens ein nahrungsmittelgeeignetes Bindemittel und mindestens eine auf das Nahrungsmittel übertragbare Funktionssubstanz umfasst, wobei
i) die Funktionssubstanz(en) vor dem Auftragen in die Zusammensetzung eingemischt werden, oder wobei
ii) die Funktionssubstanz(en) zumindest teilweise nachträglich auf die zuvor aufgetragene Zusammensetzung aufgetragen werden,
c) optional Trocknen oder Trocknenlassen der aufgetragenen Beschichtung(en), und
d) Wenden der beschichteten Hülle, so dass die Beschichtung(en) innenseitig zu liegen kommen.

12. Verfahren nach Anspruch 11, wobei in Schritt b) i) und/oder b) ii) die Zusammensetzung bzw. die Funktionssubstanz(en) durch Sprühen, Drucken, Rakeln, Lackieren, Beflocken oder Kalandrieren aufgebracht werden.

13. Verfahren zum Übertragen mindestens einer Funktionssubstanz auf ein Nahrungsmittel, insbesondere auf Wurstbrät, umfassend die Schritte:
a) Herstellen einer innenseitig beschichteten Nahrungsmittelhülle nach dem Verfahren gemäß Anspruch 11 oder 12,
b) Einfüllen des Nahrungsmittels, insbesondere Wurstbrät, in die so hergestellte Hülle,
c) Schrumpfenlassen der Hülle, und
d) Übertragenlassen der Funktionssubstanz(en) auf das Nahrungsmittel, insbesondere auf das Wurstbrät.

14. Verwendung einer Nahrungsmittelhülle nach einem der Ansprüche 1 bis 10 zum Übertragen mindestens einer Funktionssubstanz auf ein Nahrungsmittel, insbesondere auf Wurstbrät.

15. Verwendung einer ein- oder mehrschichtigen schlauchförmigen Nahrungsmittelhülle bei der die Hülle Schrumpfeigenschaft besitzt, und die eine auf die Innenseite der Hülle aufgetragene Zusammensetzung umfasst, wobei die Zusammensetzung mindestens ein nahrungsmittelgeeignetes Bindemittel und mindestens eine Funktionssubstanz umfasst, zur Verbesserung der Übertragung einer oder mehrerer Funktionssubstanzen auf ein Nahrungsmittel, insbesondere auf Wurstbrät.
